# EUROPEAN PATENT SPECIFICATION

(11) **EP 0 413 403 B1**
(45) Date of publication and mention of the grant of the patent: **07.07.1999**
(21) Application number: 90202213.6
(22) Date of filing: 15.08.1990
(51) Int. Cl.: C08F 236/10, C08F 297/04, C08F 212/08, C08F 4/48, C08F 2/10

(54) **Process for the preparation of copolymers of conjugated dienes and vinyl aromatic compounds**
Verfahren zur Herstellung von Copolymeren konjugierter Dienen mit vinylaromatischen Verbindungen
Procédé de préparation de copolymères de diènes conjugués avec des composés vinylaromatiques

(30) Priority: 16.08.1989 GB 8918702
(43) Date of publication of application: 20.02.1991
(73) Proprietor: SHELL INTERNATIONALE RESEARCH MAATSCHAPPIJ B.V., 2596 HR Den Haag (NL)
(72) Inventor: van Ballegooijen, Hendrik, NL-1031 CM Amsterdam (NL); Peters, Joseph Peter Marie, F-13131 Berre L'Etang Cedex, (FR); Plum, Johannes Theodorus Andreas, NL-2596 HR The Hague (NL)

(56) References cited:
- FR-A- 2 089 617
- US-A- 3 390 207
- DATABASE WPI, no. 77-78518Y [44], Derwent Publications Ltd, London, GB; & JP-A-52 112 691 (ASAHI CHEMICAL) 21-09-1977
- DATABASE WPIL, no. 85-137834 [23], Derwent Publications Ltd, London, GB; & JP-A-60 072 907 (SUMITOMO CHEMICAL) 25-04-1925
- EUR. POLYM. J., vol. 22, no. 9, 1986, pages 707-710, Pergamon Journals Ltd, GB; R. WERBOWYJ et al.: "Complexes of butadienyllithium oligomers with tetramethylethylenediamine and polymer microstructure in diamine modified butadiene polymerization"
- H.F. MARK et al.: "Encyclopedia of Polymer Science and Engineering", vol. 12, edition 2, 1988, page 520, J. Wiley and Sons, New York, US

## Description

The invention relates to a process for the preparation of copolymers of at least one conjugated diene and at least one vinyl aromatic compound comprising reacting the monomers in an essentially inert organic solvent and with the aid of an initiator based on lithium. By the process of the invention, there are prepared copolymers represented by substantially random copolymers and block copolymers, and products further derived therefrom such as blockcopolymers having substantially hydrogenated conjugated diene blocks and compositions, containing the random copolymers such as unvulcanized compositions containing them, and products containing to said random copolymers in a vulcanized state. By substantially random copolymers are here meant copolymers in which more than 60% of the monomer units are arranged in an arbitrary manner.

Many processes for the preparation of substantially random copolymers and block copolymers of conjugated dienes and vinyl aromatic compounds are well known in the art. Some representative documents relating to processes for the manufacture of these random copolymers are British patent specifications No. 1,136,189 (1), No. 1,283,327 (2), No. 1,222,325 (3), No. 1,396,630 (4) and No. 1,400,497 (5); British patent application No. 2,071,117 (6); European patent applications No. 84200718.9 (7), No. 87202326.2 (8) and No. 88202329.4 (9); European patent No. 162,483 (10); European patent application No. 81110517.0 (11), US patents No. 3,953,543 (12), No. 2,975,160 (13) and No. 3,294,768 (14); British patent No. 1,466,183 (15); British patent application No. 2,075,521 (16) and French patent No. 1,444,052 (17). For convenience, the numbers between brackets are used to refer to the respective document throughout the specification.

A general trend which can be derived from the contents of the above cited documents in relation to the solvent used in the polymerization processes described is that essentially any aliphatic, cycloaliphatic or aromatic compound or a mixture of these compounds can be used as solvent, provided that the compound is essentially inert.

As particularly preferred solvents are mentioned: a 50:50 weight ratio mixture of cyclohexane and isopentane (in 3), cyclohexane (in 7 and 8), hexane and cyclohexane or mixtures thereof (in 11 and 12).

In the exemplified embodiments of the processes illustrating the inventions of the above cited documents use is made of the following solvents:
cyclohexane (in 1,7,8,9,10,11,12), a cyclohexane/n-hexane mixture (50:50 weight ratio in 4 and 5 and 30:70 weight ratio in 12), a cyclohexane/isopentane mixture (50:50 weight ratio in 3 and 5), benzene or heptane (in 15), hexane (in 12) or toluene (in 16).

From the above it can be derived that cyclohexane alone or in combination with another compound is a highly preferred solvent in prior art processes.

The same picture may be derived from prior art publications relating to the manufacture of block copolymers derived from at least one conjugated diene and at least one vinyl aromatic compound, as may be clearly appreciated by people skilled in the art from e.g. the disclosures of British patent specifications Nos. 1,527,226 (18) and 1,068,130 (19) and US patents Nos. 3,231,635 (20); 3,135,716 (21); 3,198,774 (22); 3,804,145 (23); 3,265,765 (24); 3,251,905 (25); 3,639,521 (26); 4,208,356 (27); 3,322,856 (28); 4,391,949 (29); 4,444,953 (30); 3,390,207 (31); 3,598,887 (32); 4,129,627 (33); 4,824,908 (34); 4,882,384 (35) and 3,949,020 (36).

An obvious reason for this is the well known dissolving ability of cyclohexane for the reaction components and the reaction products of polymerization processes of aromatic vinyl compounds and conjugated dienes. Furthermore the use of cyclohexane as solvent is an economical attractive choice because of its ready availability and its relatively low price.

It will be appreciated that, since the random or block copolymerization processes referred to above are suitably carried out at temperatures in the range of from 20 ^{o}C to 110 ^{o}C, and preferably in the range of from 30 to 70 ^{o}C often compounds having a lower boiling point than cyclohexane, i.e. lower than 80 ^{o}C, are added to the cyclohexane containing polymerization medium, in such concentrations that the solvency power is still sufficient, in order to provide enough vapour pressure to be able to remove the heat of polymerization by means of evaporative cooling.

Isopentane and n-hexane are known to be suitable for this purpose.

Therefore it is an object of the present invention to replace a major part of the cyclohexane component of the solvent used in prior art processes for the preparation of substantially random or block copolymers of conjugated dienes and vinyl aromatic compounds, by a more volatile component while maintaining sufficient solvency during all stages of the polymerization. This was thought to be attractive since it was assumed that this would lead to considerable savings in the steam coagulation of the cement, the solvent recovery and the polymer drying operation. Moreover if a lower boiling solvent were used as the sole solvent in the entire polymerization process further savings could be achieved in solvent storage handling and purification.

As a result of extensive research and experimentation a process has now surprisingly been found in which the polymerization reaction is carried out in a solvent which consists for at least 60 % by weight of cyclopentane and in which process the heat of reaction is withdrawn by means of reflux cooling.
When using cyclopentane as the major component by weight of the solvent in the process of the present invention, several additional advantageous aspects, apart from those already mentioned related to the use of a low boiling solvent, can be recognized.

In the process embodiment according to the present invention for preparation of random copolymers, polymerization rate constants have been found to be significantly higher than in similar polymerization processes using n-hexane/cyclohexane mixtures as solvent, which under similar conditions results in higher polymerization rates or alternatively results in a reduction of the monomer concentration in the reaction mixture.

This implies that at the end of the polymerization reaction purification of the resulting polymer is easier and thus more economical and environmentally benign.

The solvency power of solvents consisting for at least 60 % by weight of cyclopentane was found to be at least as well as that of solvents consisting for at least 50 % by weight of cyclohexane during all stages of the polymerization process.

Since the generally applied reaction temperature lies in the range up to 95 ^{o}C and since cyclopentane has a boiling point of 49 ^{o}C, i.e. 32 ^{o}C lower than cyclohexane, polymerization processes carried out using a solvent according to the present invention can be easily cooled by means of reflux cooling only.
Since the polymerization process according to the present invention can be carried out at relatively low temperatures the danger of thermal decomposition of the living polymer chain end is lowered as well as the chance that when styrene is applied as the vinyl aromatic compound a high polymerization temperature causes the thermal homopolymerization of the monomer by free radicals. Cyclopentane is readily available and can be obtained in industrial quantities from for instance naphtha streams by distillation after complete hydrogenation of the C₅ fraction, from distillation of refinery crude distiller C₅ streams or by hydrogenation of dicyclopentadiene.

Although in the older documents No's 2, 3, 6, 7, 9, 10, 13, 14, 18, 22, 25 and 26 cyclopentane can be found amongst the compounds actually mentioned as suitable solvents, none of these documents either designates cyclopentane as a solvent actually used in commercial large scale manufacturing processes or illustrates the object of its invention with an example wherein cyclopentane is used as a solvent. Moreover, in more recent publications no reference to the use of cyclopentane was made at all.

Apparently these documents cite cyclopentane merely for the sake of illustration as a principally possible one amongst many other cycloaliphatic compounds which can be used as a solvent.

The unexpectedness of the finding that cyclopentane is particularly suitable for use as a solvent in processes for the preparation of random or block copolymers of conjugated dienes and vinyl aromatic compounds is stressed by the fact that cyclopentane has been readily available for a respectable lenght of time.

Any other inert aliphatic, cycloaliphatic or aromatic compound being mixable with cyclopentane and not interfering with the solvency power may constitute the remaining 40 or less weight percentages of the solvent, aliphatic and/or cycloaliphatic and/or aromatic compounds containing 6 or less carbon atoms being preferred, isopentane being the most preferred.

In a preferred embodiment of the present invention the solvent consists for more than 80 %, more preferably for more than 95 %, by weight of cyclopentane.

The solvents according to the present invention have been found to be suitable either in virtually any industrial solution polymerization process for the preparation of substantially random copolymers of conjugated dienes and vinyl aromatic compounds or in virtually any industrial polymerization process for the preparation of block copolymers of at least one conjugated diene and at least one vinyl aromatic compound and more particularly for the manufacture of linear, branched or star shaped block copolymers. For example by choosing a specific process type applying specific reaction conditions substantially random copolymers having the desired specific characteristics can be produced.

Cyclopentane can be conveniently applied in processes disclosed in any of the cited documents 1 to 10.
However, of all random polymerization processes the one as disclosed in cited document 2, i.e. British patent specification No. 1,283,327, is particularly preferred. Therefore according to a preferred embodiment of the present invention random copolymers are prepared by batch copolymerization of a conjugated diene and a vinyl aromatic compound with the aid of an initiator based on lithium in the prasence of a solvent consisting for at least 60 % by weight of cyclopentane, in which embodiment (a) first a starting mixture is prepared from the diluent and part of the totally needed quantity of each of the monomers (b) subsequently the copolymerization is initiated by contacting this mixture with the initiator, and (c) during copolymerization the monomer ratio in the reaction mixture is kept constant (as hereinafter described) by addition of the remaining part of each of the monomers, while the heat of reaction is withdrawn by means of reflux cooling.

With the term "constant" as used throughout the specification is meant that the monomer weight ratio during the copolymerization is substantially balanced.

In step (b) as a rule the totally needed quantity of initator is added to the mixture mentioned under (a) under homogenization in a comparatively short time. Usually the moment at which step (c) is started approximately coincides with that at which the addition of initiator is stopped, but may be a little earlier or later.

However, it will be appreciated that in the cited document 19, several teachings could be found by a person skilled in the art contrary to the use of the presently proposed solvent during the manufacture of block copolymers of a conjugated diene and a vinyl aromatic compound.

In particular from page 2, lines 41-65 and lines 93-127 of said publication, a person skilled in the art could only find teachings which could led him away from the application of cyclopentane as main solvent during the complete polymerization process as presently proposed.

According to a preferred embodiment of the invention, such a block copolymerization process is performed by a polymerization process with the aid of an initiator based on lithium in the presence of a solvent consisting for at least 60% by weight of cyclopentane comprising the well known sequential addition of monomer techniques, incremental addition of monomer technique or coupling technique as illustrated in e.g. the before-mentioned publications Nos. 25, 31, 32 and 33.

It will be appreciated that the present process can be used to manufacture block copolymers containing tapered copolymer blocks by copolymerizing a mixture of conjugated diene and a vinyl aromatic compound utilizing the difference in their copolymerization reactivity rates as is e.g. known from the before-mentioned patent publications Nos. 24-27.

Also symmetric and asymmetric radial and star block copolymers may be prepared as is known from the before-mentioned publications Nos. 20, 24 and 28-30.

In general, the block copolymers may be produced by anionic polymerization employing an organomonolithium initiator, preferably sec-butyllithium.

The first step of the preferred embodiment of this process involves contacting the vinyl aromatic compound, preferably styrene, and the organolithium initiator in the presence of the solvent, therein forming a living polymer compound having the simplified structure A-Li and having a molecular weight between 2,000 and 100,000.

The concentration of the initiator can be regulated to control the molecular weight. Generally the initiator concentration is in the range of about 0.25 to 50 milimoles per 100 grams of monomer and the polymerization reactions are usually carried out at a temperature in the range of -35 to 150 °C and at pressures which are sufficient to maintain the reaction mixture in the liquid phase. Next, the living polymer in solution is contacted with a conjugated diene, providing a living polymer having a simplified structure A-B-Li.

Said living block polymers are subsequently reacted alone or in combination with other living block copolymers C-Li with a polyfunctional coupling agent. The living block copolymers C-Li may be prepared in a separate reactor or in the same reactor as the A-B-Li polymers. In that case, after the A-Li polymers are formed, additional initiator optionally may be added, whereafter the conjugated diene is added. A mean molecular weight of the complete coupled block copolymers is preferably 10,000 to 500,000.

It will be appreciated that the preparation of living A-B block copolymers can advantageously be carried out in one reactor, due to the use of the presently proposed solvent system.

As initiator based on lithium for these embodiments can be used e.g. alkyllithium compounds, such as methylenedilithium, isopropyl lithium, n.butyllithium, sec-butyllithium, amyllithium 2-ethylhexyllithium, phenyllithium, ethylenedilithium, trimethylenedilithium, pentamethylenelithium, 1,4-dilithiobenzene and the like.

The copolymerization reaction according to both embodiments is preferably terminated by means of substances which kill the living polymer; this can be a proton releasing compound, for instance water, an alcohol, an amine or protonic acid, or, which is preferred, a coupling agent.

The coupling can be effected conveniently by use of a difunctional coupling agent, for example 1,2 dibromoethane, or a diisocyanate providing a linear coupled copolymer or a tri-, tetra-, or other polyfunctional coupling agent for example the tetra-functional compounds silicon tetrachloride, stannic chloride, dimethyladipate and diethyladipate providing a non-linear or branched coupled copolymer. Where the coupling is only partly complete for example at 50 % of the theoretical amount, the product of the coupling reaction consists partly of coupled copolymer and partly of uncoupled copolymer.

The aromatic vinyl compound is preferably styrene, but may consist of another mono-vinyl aromatic compound for example: 1-vinylnaphthalene, 3,5-diethylstyrene, 4-n-propylstyrene, 2,4,6-trimethylstyrene, 4-phenylstyrene, 4-methylstyrene, 3,5-diphenylstyrene, 3-ethyl-1-vinylnaphthalene 8-phenyl-1-vinylnaphthalene or a mixture thereof or mixtures containing predominantly styrene.

The conjugated diene is one capable of copolymerization with styrene or another aromatic vinyl compound and such that when polymerized with styrene or another selected aromatic vinyl compound or compounds, it provides a polymer having the desired properties. The diene is preferably 1,3-butadiene, but may be another diene, for example, 1,3-pentadiene, 2-methyl-1,3-butadiene (isoprene), 2,3-dimethyl-1,3-butadiene, 2-methyl-1,3-pentadiene or 2,3-dimethyl-1,3-pentadiene or mixtures of them alone or with butadiene.

According to a preferred embodiment of the presently proposed process for the manufacture of substantially random copolymers, two different preselected monomer ratios are applied: the monomer ratio in the mixture prepared beforehand in which the copolymerization is initiated and that in which the monomers are supplied after the initiation of the copolymerization. The monomer suppletion can take place by addition either of the monomers as a mixture prepared beforehand or of each monomer separately. Also the addition can be carried out continuously or portionwise. As a result of the measures mentioned, during the polymerization the monomer ratio and the monomer concentration in the reactor is kept constant or substantially constant which facilitates the control of the process. It is recommended that less than 90 % by weight of the totally needed quantity of the aromatic vinyl compound is used in the preparation of the starting mixture, the application of quantities smaller than 50 % by weight of the totally needed quantity of the aromatic vinyl compound being particularly preferred.

According to said preferred embodiment for manufacture of random copolymers, also special preference is given to the addition of the remaining part of each of the monomers during the copolymerization at a rate equal to the rate at which the concerning monomer is consumed. Here "equal" includes substantially equal. Fulfilment of this condition results in that in the reactor not only the monomer ratio but also the absolute quantity of each of the monomers remains constant or substantially constant. In this case the decrease of the monomer concentration does no exceed a value determined by the increase of the polymer concentration. Under these conditions the rate at which the monomers are applied during the copolymerization can be kept constant or substantially constant at a value calculated beforehand and the heat development also remains constant or substantially constant throughout the polymerization.

For obtaining a suitable polymerization rate there is no need to carry out the reaction at a high temperature, however the temperature should be sufficiently high to be able to withdraw the heat of the polymerization process by means of evaporative cooling. Therefore reaction temperatures up to 95 ^{o}C are preferred.

The preferred diene/aromatic vinyl compound weight ratio in the mixture in which the copolymerization reaction is initiated amounts to from 50:50 to 5:95.

Though in principle in the mixture in which the copolymerization is initiated any monomer concentration can be applied preferably a total amount of monomer of at least 0.05 % by weight is used, total amounts of from 0.1 to 10.0 % by weight being particularly recommended.

It is desirable that throughout the process the reaction mixture is intensively homogenized. As a rule the homogenization is brought about by means of an intensively working stirrer.

As an initiator based on lithium can for instance be applied: alkyllithium compounds, such as methylenedilithium, isopropyllithium, n-butyllithium, sec-butyllithium, amyllithium, 2-ethylhexyllithium, phenyllithium, ethylenedilithium trimethylenedilithium, pentamethylenedilithium, 1,4-dilithiobenzene, 1,5-dilithiobenzene, 1,5-dilithionaphthalene and 1,3,5-trilithiumpentane.

The amount of initiator used in the process according to the present invention may vary within wide limits. In general 0.001-1.0 g of metallic or bound lithium per 100 g of monomer is applied. If required the copolymerization can be carried out in the presence of a slight amount of divinylbenzene or other substance that causes branching or cross-linking of the copolymer, prior to, together with or subsequent to the use of a coupling agent such as silicon tetrachloride, stannic chloride, a dihalogen hydrocarbon, a monoester such as ethylacetate, ethylacrylate or phenyl benzoate or a diester obtained by the reaction of a dicarboxylic acid with a monovalent alcohol, such as diethyladipate. In addition the process can be applied in combination with the use of polar organic compound for example as described in the British patent specification No. 884,490, which modifies the initiator in such a way that statistic copolymerization is promoted. In this way the microstructure of the diene part of the copolymer is changed to the effect that the 1,2-addition structure increases.

Generally at the end of the reaction the copolymer containing the reaction mixture is pumped to a polymer recovery area. The principal step in recovery of the polymer comprises coagulation and eventual drying of the polymer to produce a crumb. Thus the cement may be coagulated by treatment with steam and/or hot water. Alternatively the cement may be sprayed into a hot water bath under such condition that a crumb is formed. The solvent is removed as a vapour and may be recovered and recycled as desired. The resulting copolymer-water slurry is withdrawn and passed on to a dewatering screen where the water passes through the screen leaving the rubber crumb. This may be reslurried with cold water, drained and finally dried by known means.

From the initially obtained substantially random copolymers or block copolymers, other products can be formed. The random copolymers may be incorporated in unvulcanized compositions comprising a blend of said copolymer and other auxiliaries and particularly vulcanizing agents. These compositions can be transformed in shaped articles, e.g. tyres and subsequently vulcanized.

It will be appreciated that the present invention is also relating to such unvulcanized compositions to shaped articles prepared from them and to vulcanized articles.

Usual compounding ingredients are vulcanizing agents, vulcanization accelerating agents, vulcanization activating agents, antioxidants, fillers and extender oils which may be naphthenic, paraffinic or, which is preferred aromatic. The preferred vulcanizing agent is sulphur and the preferred filler is carbon black. Other examples of vulcanizing agents are 4,4'-dithiomorpholine and alkenyl phenoldisulphides. Examples of vulcanization activating agents which may be present are zinc oxide and stearic acid. Examples of vulcanization accelerating agents are cyclohexyl-2-benzothiazyl sulphenamide and 2-(4-morpholinyl-mercapto-)benzothiazole. The copolymer composition may further contain other inorganic fillers for example silica, bentonite, clay, titanium oxide, talc, diatomaceous earth, chalk and china clay.

Other products derived from the initially prepared block copolymers include, in particular, those copolymers the elastomeric mid block of which has been substantially hydrogenated and/or functionalized by conversion with reagents thereby introducing a reactive group intended for further cross-linking in the final product, e.g. maleic anhydride.

The following examples and comparative examples are presented to further illustrate the invention, without intending to limit the scope thereof.

### EXAMPLE 1

1,3-Butadiene and styrene were copolymerized by means of sec-butyllithium as the initiator with the use of a purified diluent, consisting of a mixture of 80 percent by weight (pbw) of cyclopentane and 20 pbw of other aliphatics and cycloaliphatics containing 5 or 6 carbon atoms. The copolymerization was carried out in a reactor of 9 litres capacity, which was provided with an vigourous stirrer and which had been washed beforehand with the diluent, the air in the reactor having been displaced by dry oxygen free nitrogen. The reactor was filled with 5000 grams of the diluent mixture, 87.9 grams of styrene and 14.7 grams of butadiene. After the reactor charge had been heated to the required temperature (75 ^{o}C) while stirring intensively, the traces of initiator poison still present were rendered harmless by the slow addition of a small amount of sec-butyllithium solution to be used for the copolymerization till the start of an increase in temperature of the mixture could be observed. This initiator solution contained 200 mmol of sec-butyllithium per litre; the said small amount corresponds to 0.2 mmol of lithium compound. The aforementioned amount of initiator solution needed for the copolymerization (40 ml) was subsequently added, intensive stirring still being continued, as a result of which the copolymerization was initiated. Immediately after the addition of the stoichiometric amount of sec-butyllithium, both styrene and butadiene were supplied, each of them in a rate equal to their consumption, i.e. 1.00 gram of styrene and 3.18 gram of butadiene per minute. After 240 minutes the monomers supply was stopped and 2 mmol of diethyladipate was added to the reactor to terminate the polymerization as well as couple the copolymer molecules formed. During the whole process the stirring was still continued and the temperature was kept at the same level of 75 ^{o}C. Twenty minutes after the addition of the diethyladipate, the polymer solution thus obtained was carried off from the reactor and the polymer was recovered by steam stripping and drying. Details of the experimental conditions, as well as data on the copolymer formed are presented in Table I.

### EXAMPLES 2-4 and COMPARATIVE EXAMPLES A and B

Examples 2, 3 and 4 and comparative examples A and B were carried out in the same manner as example 1, with the exception of variations in the process as can be derived from tables II, III, IV, V and VI respectively, showing details of experimental conditions as well as the data on the copolymers formed.

**TABLE I**

| (Example 1) | |
|---|---|
| 1- Composition of the reactor charge at the moment when the polymerization was initiated: | |
| diluent (cyclopentane 80 %)) | 5000 g |
| styrene | 87.9 g |
| butadiene | 14.7 g |
| sec-butyllithium | 8 mmol |

| 2- Polymerization conditions | |
|---|---|
| reaction temperature | 75 ^{o}C |
| rate of styrene supply | 1.0 g/min |
| rate of butadiene supply | 3.18 g/min |
| polymerization time | 240 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 215000¹⁾ |
| Molecular weight (after coupling) | 720000 |
| Coupled portion of the copolymer | 77 % |
| Content of copolymerized styrene (after coupling) | 23.8 %w |
| Microstructure of the butadiene part of the copolymer cis-1,4 content | 34.7 %w |
| trans-1,4 content | 55.3 %w |
| 1,2 content | 10.0 %w |

| | |
|---|---|
| 1) Molecular weights were determined by GPC, calibrated with polystyrene samples of well-known molecular weights and narrow molecular weight distribution. | |

**TABLE II**

| (Example 2) | |
|---|---|
| 1- Composition of the reactor charge at the moment when the polymerization was initiated: | |
| diluent (cyclopentane 80 %)) | 5000 g |
| styrene | 149.0 g |
| butadiene | 25.0 g |
| sec-butyllithium | 8 mmol |

| 2- Polymerization conditions | |
|---|---|
| reaction temperature | 75 ^{o}C |
| rate of styrene supply | 1.69 g/min |
| rate of butadiene supply | 5.36 g/min |
| polymerization time | 142 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 229000¹⁾ |
| Molecular weight (after coupling) | 767000 |
| Coupled portion of the copolymer | 77 % |
| Content of copolymerized styrene (after coupling) | 23.6 %w |
| Microstructure of the butadiene part of the copolymer cis-1,4 content | 36.7 %w |
| trans-1,4 content | 55.5 %w |
| 1,2 content | 7.8 %w |

| | |
|---|---|
| 1) Molecular weights were determined by GPC, calibrated with polystyrene samples of well-known molecular weights and narrow molecular weight distribution. | |

**TABLE III**

| (Example 3) | |
|---|---|
| 1- Composition of the reactor charge at the moment when the polymerization was initiated: | |
| diluent (cyclopentane 80 %)) | 5000 g |
| styrene | 26.7 g |
| butadiene | 4.4 g |
| sec-butyllithium | 8 mmol |

| 2- Polymerization conditions | |
|---|---|
| reaction temperature | 90 ^{o}C |
| rate of styrene supply | 1.0 g/min |
| rate of butadiene supply | 3.18 g/min |
| polymerization time | 240 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 235000¹⁾ |
| Molecular weight (after coupling) | 748000 |
| Coupled portion of the copolymer | 70 % |
| Content of copolymerized styrene (after coupling) | 24.9 %w |
| Microstructure of the butadiene part of the copolymer cis-1,4 content | 34.3 %w |
| trans-1,4 content | 56.6 %w |
| 1,2 content | 9.1 %w |

| | |
|---|---|
| 1) Molecular weights were determined by GPC, calibrated with polystyrene samples of well-known molecular weights and narrow molecular weight distribution. | |

**TABLE IV**

| (Example 4) | |
|---|---|
| 1- Composition of the reactor charge at the moment when the polymerization was initiated: | |
| diluent (cyclopentane 80% !)) | 5000 g |
| styrene | 58.5 g |
| butadiene | 9.7 g |
| sec-butyllithium | 8 mmol |

| 2- Polymerization conditions | |
|---|---|
| reaction temperature | 90 ^{o}C |
| rate of styrene supply | 2.19 g/min |
| rate of butadiene supply | 6.94 g/min |
| polymerization time | 110 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 218000¹⁾ |
| Molecular weight (after coupling) | 730000 |
| Coupled portion of the copolymer | 71 % |
| Content of copolymerized styrene (after coupling) | 23.5 %w |
| Microstructure of the butadiene part of the copolymer cis-1,4 content | 36.0 %w |
| trans-1,4 content | 56.8 %w |
| 1,2 content | 7.2 %w |

| | |
|---|---|
| 1) Molecular weights were determined by GPC, calibrated with polystyrene samples of well-known molecular weights and narrow molecular weight distribution. | |

**TABLE V**

| (Comparative example A) | |
|---|---|
| 1- Composition of the reactor charge at the moment when the polymerization was initiated: | |
| diluent (cyclopentane/n-hexane 50/50 w/w) | 5000 g |
| styrene | 149.0 g |
| butadiene | 28.8 g |
| sec-butyllithium | 8 mmol |

| 2- Polymerization conditions | |
|---|---|
| reaction temperature | 75 ^{o}C |
| rate of styrene supply | 1.0 g/min |
| rate of butadiene supply | 3.18 g/min |
| polymerization time | 240 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 220000¹⁾ |
| Molecular weight (after coupling) | 750000 |
| Coupled portion of the copolymer | 74 % |
| Content of copolymerized styrene (after coupling) | 24.1 %w |
| Microstructure of the butadiene part of the copolymer cis-1,4 content | 35.4 %w |
| trans-1,4 content | 55.4 %w |
| 1,2 content | 9.2 %w |

| | |
|---|---|
| 1) Molecular weights were determined by GPC, calibrated with polystyrene samples of well-known molecular weights and narrow molecular weight distribution. | |

**TABLE VI**

| (Comparative example B) | |
|---|---|
| 1- Composition of the reactor charge at the moment when the polymerization was initiated: | |
| diluent (cyclopentane/n-hexane 50/50 w/w) | 5000 g |
| styrene | 58.5 g |
| butadiene | 11.2 g |
| sec-butyllithium | 8 mmol |

| 2- Polymerization conditions | |
|---|---|
| reaction temperature | 90 ^{o}C |
| rate of styrene supply | 1.0 g/min |
| rate of butadiene supply | 3.18 g/min |
| polymerization time | 240 min |

| 3- Coupling reaction | |
|---|---|
| diethyladipate (DEAP) | 2 mmol |
| coupling time | 20 min |

| 4- Copolymer formed | |
|---|---|
| Molecular weight (before coupling) | 227000¹⁾ |
| Molecular weight (after coupling) | 775000 |
| Coupled portion of the copolymer | 72 % |
| Content of copolymerized styrene (after coupling) | 24.3 %w |
| Microstructure of the butadiene part of the copolymer cis-1,4 content | 35.0 %w |
| trans-1,4 content | 55.1 %w |
| 1,2 content | 9.9 %w |

| | |
|---|---|
| 1) Molecular weights were determined by GPC, calibrated with polystyrene samples of well-known molecular weights and narrow molecular weight distribution. | |

### EXAMPLE 5

Styrene-butadiene styrene block copolymers were prepared on a 1 kg scale according to a two stage polymerisation procedure followed by coupling of the linear living block copolymer with 1,2-dibromoethane (DBE) as coupling agent in one reactor.

Styrene (500 g) in 6 l of a mixture of 80 pbw of cyclopentane and 20 pbw of other aliphatics and cycloaliphatics containing 5 or 6 carbon atoms was charged in the reactor.

Prior to its use in the polymerization experiments, the solvent mixture was pumped over Al₂O₃[Alcoa F7 (trademark) activated at 170 °C for at least 24 hours] to remove any polar compounds and stored under dry and oxygen free nitrogen. The polymerization of styrene was carried out after the traces of initiator poison still present were eliminated by slow addition under vigorously stirring of a small amount of sec-butyllithium solution to be used for the polymerization until the start of an increase in temperature of the mixture could be observed. This initiator solution contained 200 mmol of sec-butyllithium per litre. 18.5 mmol of sec-butyllithium was subsequently added and the polymerization was performed at a temperature of 60 °C during 40 minutes.

After complete styrene conversion butadiene (500 g) was added by means of continuous varying addition in 20 minutes and polymerization was carried out at a temperature in the range of from 60 to 70 °C. An additional reaction time of 45 minutes was applied.

The obtained "living" polymer was coupled with 1.74 g DBE in 30 minutes. The obtained reaction mixture was stabilized after coupling by using Ionol (trademark). The resultant polymer cement was worked up, either alone or in a two batch blend by steam coagulation, using a laboratory type steam reactor.

The wet polymer crumbs were dried at 90 °C for 2 hours in an oven with forced air circulation.

### EXAMPLE 6

According to about the same procedure of example 5, styrene-isoprene-styrene block copolymer was prepared, starting from 148 g styrene in 6 l of the herein before-mentioned solvent, using 13.5 mmol sec-butyl lithium and 852 g of isoprene supplied in 20 minutes. Coupling was carried out with 1.28 g of DBE.

GPC analysis of the samples and viscosity measurements on solutions of the samples in the herein before specified solvent in a concentration range from 15 to 35% by weight at a temperature of 70 °C using a modified EPPRECHT RHEOMAT 30 (trademark) Viscosimeter, revealed that the prepared samples were well within formerly accepted manufacturing specifications of the same polymerization recipes in the classical two reactor-isopentane/cyclohexane solvent system. The polymers obtained showed a narrow molecular weight distribution, which indicated that the solvent did not contain hydrocarbon compounds which were capable of deactivating "living" polymers during the reaction. During the polymerisation no precipitation of the styrene block was observed.

Additional data of the prepared block copolymers have been listed hereinafter.

| | Ex. 5 | Ex. 6 |
|---|---|---|
| Molecular weight of polystyrene block | 110.000 | 276.000 |
| Molecular weight after coupling | 229.000 | 168.000 |
| Coupling efficiency | 86.8 | 82.9 |

## Claims

1. A process for the preparation of copolymer of at least one conjugated diene and at least one vinyl aromatic compound comprising reacting the monomers with the aid of an initiator based on lithium in the presence of an essentially inert solvent wherein said solvent consists for at least 60 per cent by weight of cyclopentane and the heat of reaction is withdrawn by means of reflux cooling.

2. A process as claimed in claim 1 wherein the solvent consists for at least 80 per cent by weight of cyclopentane.

3. A process as claimed in claim 2 wherein the solvent consists for at least 95 per cent by weight of cyclopentane.

4. A process as claimed in any one of the claims 1 to 3 wherein the solvent components other than cyclopentane occupying the remaining weight percentage of the solvent, are aliphatic and/or cycloaliphatic and/or aromatic compounds containing 6 or less carbon atoms.

5. A process as claimed in claim 4 wherein said solvent component consists of isopentane.

6. A process according to claim 1 wherein substantially random copolymers are prepared.

7. A process according to claim 1 wherein tri block copolymers or star shaped block copolymers are prepared.

8. A process according to claim 6 wherein the copolymerization is carried out at a temperature of up to 95 ^{o}C.

9. A process according to claim 6 wherein
(a) first a starting mixture is prepared from the diluent and part of the totally needed quantity of each of the monomers,
(b) subsequently the copolymerization is initiated by contacting this mixture with the initiator, and
(c) during copolymerization the monomer ratio in the reaction mixture is kept constant (as hereinbefore described) by addition of the remaining part of each of the monomers.

10. A process according to claim 6 wherein in the preparation of the starting mixture less than 90 per cent by weight of the totally needed quantity of aromatic vinyl compound or compounds is used.

11. A process as claimed in claim 10 wherein in the preparation of the starting mixture less than 50 per cent by weight of the totally needed quantity of the aromatic vinyl compound or compounds is used.

12. A process as claimed in any one of the claims 8 to 11 wherein the remaining part of each of the monomers is added at a rate equal (as hereinbefore defined) to the rate at which the concerning monomer is consumed.

13. A process as claimed in any one of the claims 8 to 12 wherein the polymerization temperature is kept constant.

14. A process as claimed in any one of the claims 8 to 13 wherein the diene:vinyl aromatic compound weight ratio in the mixture, in which the copolymerization is initiated amounts of from 50:50 to 5:95.

15. A process as claimed in any one of the claims 8 to 14 wherein as the diene 1,3-butadiene and as the vinyl aromatic compound styrene is applied.

16. A process as claimed in any one of the claims 8 to 15 wherein the total amount of monomer in the mixture wherein the copolymerization is initiated amounts to at least 0.05 per cent by weight.

17. A process as claimed in any one of the claims 8 to 16 wherein the copolymerization reaction is discontinued as soon as the addition of the remaining part of the monomers has been completed.

18. A process according to claim 7 wherein styrene-butadiene-styrene triblock copolymer are prepared.

19. A process according to claim 7 wherein star shaped multiblock copolymers, containing styrene-butadiene arms, are prepared.

## Patentansprüche

1. Verfahren zur Herstellung von Copolymeren aus wenigstens einem konjugierten Dien und wenigstens einer vinylaromatischen Verbindung, welches Verfahren ein Umsetzen der Monomeren mit Hilfe eines auf Lithium aufgebauten Initiators in Gegenwart eines im wesentlichen inerten organischen Lösungsmittels umfaßt, wobei das genannte Lösungsmittel zu wenigstens 60 Gew.-% aus Cyclopentan besteht und die Reaktionswärme durch Rückflußkühlen abgeführt wird.

2. Verfahren nach Anspruch 1, worin das Lösungsmittel zu wenigstens 80 Gew.-% aus Cyclopentan besteht.

3. Verfahren nach Anspruch 2, worin das Lösungsmittel zu wenigstens 95 Gew.-% aus Cyclopentan besteht.

4. Verfahren nach einem der Ansprüche 1 bis 3, worin die von Cyclopentan verschiedenen, den restlichen Prozentsatz des Lösungsmittels einnehmenden Lösungsmittelkomponenten aliphatische und/oder cycloaliphatische und/oder aromatische Verbindungen mit einem Gehalt an 6 oder weniger Kohlenstoffatomen sind.

5. Verfahren nach Anspruch 4, worin die Lösungsmittelkomponente aus Isopentan besteht.

6. Verfahren nach Anspruch 1, worin im wesentlichen statistische Copolymere hergestellt werden.

7. Verfahren nach Anspruch 1, worin Dreiblockcopolymere oder sternförmige Blockcopolymere hergestellt werden.

8. Verfahren nach Anspruch 6, worin die Copolymerisation bei einer Temperatur von bis zu 95°C ausgeführt wird.

9. Verfahren nach Anspruch 6, worin
(a) zunächst ein Ausgangsgemisch aus dem Verdünnungsmittel und einem Teil der insgesamt erforderlichen Menge jedes der Monomeren bereitet wird,
(b) anschließend die Copolymerisation durch Inkontaktbringen dieses Gemisches mit dem Initiator initiiert wird und
(c) während der Copolymerisation das Monomerenverhältnis im Reaktionsgemisch durch Zugabe des restlichen Teiles jedes Monomers konstant gehalten wird (wie zuvor beschrieben).

10. Verfahren nach Anspruch 6, worin in der Herstellung des Ausgangsgemisches weniger als 90 Gew.-% der insgesamt erforderlichen Menge an aromatischer Vinylverbindung oder aromatischen Vinylverbindungen eingesetzt wird.

11. Verfahren nach Anspruch 10, worin in der Herstellung des Ausgangsgemisches weniger als 50 Gew.-% der insgesamt erforderlichen Menge an aromatischer Vinylverbindung oder aromatischen Vinylverbindungen eingesetzt wird.

12. Verfahren nach einem der Ansprüche 8 bis 11, worin der restliche Teil jedes Monomers mit einer Geschwindigkeit zugesetzt wird, die der Geschwindigkeit gleich ist (wie zuvor definiert), mit welcher das betreffende Monomer verbraucht wird.

13. Verfahren nach einem der Ansprüche 8 bis 12, worin die Polymerisationstemperatur konstant gehalten wird.

14. Verfahren nach einem der Ansprüche 8 bis 13, worin das Gewichtsverhältnis Dien:vinylaromatische Verbindung in dem Gemisch, worin die Copolymerisation initiiert wird, von 50:50 bis 5:95 beträgt.

15. Verfahren nach einem der Ansprüche 8 bis 14, worin als Dien 1,3-Butadien und als vinylaromatische Verbindung Styrol eingesetzt werden.

16. Verfahren nach einem der Ansprüche 8 bis 15, worin die Gesamtmenge Monomer in dem Gemisch, worin die Copolymerisation initiiert wird, wenigstens 0,05 Gew.-% beträgt.

17. Verfahren nach einem der Ansprüche 8 bis 16, worin die Copolymerisationsreaktion abgebrochen wird, sobald die Zugabe des restlichen Teils der Monomeren vervollständigt worden ist.

18. Verfahren nach Anspruch 7, worin Styrol-Butadien-Styrol-Dreiblockcopolymere hergestellt werden.

19. Verfahren nach Anspruch 7, worin sternförmige Mehrblockcopolymere mit einem Gehalt an Styrol-Butadien-Armen hergestellt werden.

## Revendications

1. Procédé de préparation d'un copolymère d'au moins un diène conjugué et d'au moins un composé vinyl aromatique comprenant la réaction des monomères à l'aide d'un initiateur à base de lithium en présence d'un solvant essentiellement inerte, dans lequel ledit solvant se compose d'au moins 60 % en poids de cyclopentane et la chaleur de réaction est extraite au moyen d'un refroidissement du reflux.

2. Procédé suivant la revendication 1, dans lequel le solvant se compose d'au moins 80 % en poids de cyclopentane.

3. Procédé suivant la revendication 2, dans lequel le solvant se compose d'au moins 95 % en poids de cyclopentane.

4. Procédé suivant l'une quelconque des revendication 1 à 3, dans lequel les composants du solvant autres que le cyclopentane occupant le pourcentage en poids restant du solvant, sont des composés aliphatiques et/ou cycloaliphatiques et/ou aromatiques contenant 6 atomes de carbone ou moins.

5. Procédé suivant la revendication 4, dans lequel le composant du solvant précité se compose d'isopentane.

6. Procédé suivant la revendication 1, dans lequel des copolymères sensiblement randomisés sont préparés.

7. Procédé suivant la revendication 1, dans lequel des copolymères triblocs ou des copolymères blocs en étoile sont préparés.

8. Procédé suivant la revendication 6, dans lequel la copolymérisation est réalisée à une température allant jusqu'à 95°C.

9. Procédé suivant la revendication 6, dans lequel :
(a) d'abord un mélange de départ est préparé à partir du diluant et d'une partie de la quantité totalement nécessaire de chacun des monomères,
(b) ensuite la copolymérisation est initiée en mettant en contact ce mélange avec l'initiateur, et
(c) pendant la copolymérisation le rapport des monomères dans le mélange réactionnel est maintenu constant (tel que décrit précédemment) par l'addition de la partie restante de chacun des monomères.

10. Procédé suivant la revendication 6, dans lequel dans la préparation du mélange de départ on utilise moins de 90 % en poids de la quantité totalement nécessaire de composé ou composés vinyliques aromatiques.

11. Procédé suivant la revendication 10, dans lequel dans la préparation du mélange de départ on utilise moins de 50 % en poids de la quantité totalement nécessaire du composé ou des composés vinyliques aromatiques.

12. Procédé suivant l'une quelconque des revendications 8 à 11, dans lequel la partie restante de chacun des monomères est ajoutée à un taux égal (tel que défini précédemment) au taux auquel le monomère concerné est consommé.

13. Procédé suivant l'une quelconque des revendications 8 à 12, dans lequel la température de polymérisation est maintenue constante.

14. Procédé suivant l'une quelconque des revendications 8 à 13, dans lequel le rapport en poids diène/composé vinyl aromatique dans le mélange, dans lequel la copolymérisation est initiée va de 50/50 à 5/95.

15. Procédé suivant l'une quelconque des revendications 8 à 14, dans lequel comme diène on applique du 1,3-butadiène et comme composé vinyl aromatique du styrène.

16. Procédé suivant l'une quelconque des revendications 8 à 15, dans lequel la quantité totale de monomère dans le mélange dans lequel la copolymérisation est initiée s'élève au moins à 0,05 % en poids.

17. Procédé suivant l'une quelconque des revendications 8 à 16, dans lequel la réaction de copolymérisation est interrompue dès que l'addition de la partie restante des monomères a été effectuée.

18. Procédé suivant la revendication 7, dans lequel on prépare un copolymère tribloc de styrène-butadiène-styrène.

19. Procédé suivant la revendication 7, dans lequel on prépare des copolymères multiblocs en étoile, contenant des branches de styrène-butadiène.
